# EUROPEAN PATENT APPLICATION

(11) **EP 4 723 260 A1**
(43) Date of publication of application: **08.04.2026**
(21) Application number: 24204270.3
(22) Date of filing: 02.10.2024
(51) Int. Cl.: H01M 10/04, H01M 10/0583

(54) **AN APPARATUS AND A METHOD FOR MANUFACTURING A SECONDARY BATTERY ASSEMBLY**

(71) Applicant: LG Energy Solution, Ltd., Seoul 07335 (KR)
(72) Inventor: HONG, Jong Hyuk, Daejon 34122 (KR); CHOI, Jin Hyeong, Daejeon 34122 (KR); LEE, Gyu Sun, Daejeon 34122 (KR)
(74) Representative: BCKIP Part mbB

(57) **Abstract**

An apparatus for manufacturing a secondary battery assembly includes: a first hopper configured to contain a plurality of unit electrode cells; a stacking table configured to have the plurality of unit electrode cells stacked thereon to thereby form a cell stack; a transfer unit configured to sequentially pick a respective one of the plurality of unit electrode cells in the first hopper, move it to the staking table and place on top of one another; a detecting unit configured to detect a relative position of a unit electrode cell placed on top of the cell stack with respect to another unit electrode cell therebelow; and a control unit configured to determine whether or not the detected relative position of the top unit electrode cell is within a predetermined range with respect to the another unit electrode cell, wherein the control unit is further configured to, if the detected relative position is not within the predetermined range, remove the top unit electrode cell from the cell stack.

## Description

### TECHNICAL FIELD

The present invention relates to an apparatus and a method for manufacturing a secondary battery assembly.

More particularly, the present invention relates to an apparatus and a method for manufacturing a secondary battery assembly with an improved productivity.

### BACKGROUND

Secondary batteries, or often called rechargeable batteries, can be discharged by being used and then restored to their original state by charging. Secondary batteries have recently been widely used as an energy source of wireless devices, such as a personal digital devices, mobile telephone, or notebook computer. Moreover, the secondary battery has attracted attention as an energy source of an electric vehicle, a hybrid electric vehicle, and the like, which are regarded as a solution to the air pollution problem caused by traditional gasoline or diesel vehicles using fossil fuel. Due to the apparent advantages of the secondary battery over other traditional energy sources, the application of secondary battery continuously becomes wider and the consumer's demands for the secondary battery is also increasing.

Among various secondary batteries, a lithium secondary battery is particularly widely used as an energy source for various electronic products because the lithium secondary battery shows a high energy density, a high operating voltage, as well as excellent storage and lifetime characteristics.

In the meantime, secondary batteries can be also classified based on a structure of an electrode assembly, which consists of a positive electrode, a separator, and a negative electrode. Typically, these assemblies fall into two categories firstly, a jelly-roll (or wound) electrode assembly, where long sheet-type positive and negative electrodes are wound together with separators in between, and secondly, a stack-type electrode assembly, where a plurality of positive electrodes and negative electrodes of a predetermined size are sequentially stacked on top of the other, having a separator interposed therebetween.

In the manufacturing process of a stack-type electrode assembly, misalignment of the electrodes during stacking can cause undesirable problems. In order to avoid a stack of misaligned electrodes from moving to a downstream process, a screening is performed. If a stack of misaligned electrodes is detected by screening, the entire stack of misaligned electrodes is typically discarded. Hence, misalignment of electrodes during stacking causes waste of materials and reduces the yield of the secondary battery assembly. Besides, it also increases overall manufacturing time, compromising the productivity of the entire manufacturing process.

Accordingly, it would be advantageous to develop a technology capable of addressing the above technical problem.

### SUMMARY OF THE INVENTION

It is an objective of the present invention to provide an apparatus and a method for manufacturing a secondary battery assembly, whose productivity and/or efficiency is increased. The problem is at least partially solved or alleviated by the subject-matter of independent claims, wherein further examples are incorporated in dependent claims.

One aspect of the present invention relates to an apparatus for manufacturing a secondary battery assembly. The apparatus may include: a first hopper configured to contain a plurality of unit electrode cells; a stacking table configured to have the plurality of unit electrode cells stacked thereon to thereby form a cell stack; a transfer unit configured to sequentially pick a respective one of the plurality of unit electrode cells in the first hopper, move it to the staking table and place on top of one another; a detecting unit configured to detect a relative position of a unit electrode cell placed on top of the cell stack with respect to another unit electrode cell therebelow; and a control unit configured to determine whether or not the detected relative position of the top unit electrode cell is within a predetermined range with respect to the another unit electrode cell, wherein the control unit is further configured to, if the detected relative position is not within the predetermined range, remove the top unit electrode cell from the cell stack.

The apparatus according to the present invention can remove, from the entire cell stack including a misaligned unit electrode cell, the misaligned unit electrode cell alone, rather than removing the entire cell stack. Therefore, the number of discarded electrodes can be reduced, preventing excessive waste of materials. Furthermore, since the cell stack part remaining after the removal of the misaligned electrode can be used for manufacturing an electrode assembly, the overall manufacturing time can be reduced.

The unit electrode cell may have a laminated structure of a positive electrode, a negative electrode, and/or a separator. However, the laminated structure of a unit electrode cell is not limited thereto. The unit electrode cell may have different laminated electrode structures. For example, the unit electrode cell may be an A-type bi-cell having a laminated structure of a positive electrode, a separator, a negative electrode, a separator, and a positive electrode or a C-type bi-cell having a laminated structure of a negative electrode, a separator, a positive electrode, a separator, and a negative electrode. The unit electrode cell may be a Mono-cell having a laminated structure of a positive electrode, a separator, a negative electrode, and a separator. The unit electrode cell may be a Half-cell having a laminated structure of a separator, a negative electrode, and a separator. In the laminated structure, the electrodes and the separator may be securely bonded together by heat and pressure applied during or after the stacking process.

The cell stack may be formed by stacking Mono-cells. However, the present invention is not limited thereto. For example, the Half-cells or bi-cells may be used to form the cell stack, and an additional separator layer may be positioned between the bi-cells.

The first hopper may be any equipment that is configured to accommodate unit electrode cells. The stacking table may be any equipment having a flat surface such that the unit electrode cells can be stacked thereon. The stacking table may further include a gripper or a guide unit to hold the cell stack while the top unit electrode cell is detached from the cell stack.

The transfer unit may be configured to sequentially pick a respective one of the plurality of unit electrode cells accommodated in the first hopper, move it to the stacking table and place it either directly on the stacking table or, if a cell stack already exists on the stacking table, on top of the cell stack. The transfer unit may be configured to pick the unit electrode cell by applying vacuum force. Placing the unit electrode cell should not affect the alignment of the other unit electrode cells forming the cell stack. The transfer unit may include one or more vacuum holes facing downwards, towards the unit electrode cell. The vacuum hole(s) may be located at the central portion of the transfer unit. The controller may control the position of the transfer unit, such that the vacuum hole(s) are positioned at the center of the unit electrode cell.

The detecting unit may be configured to detect a relative position of an electrode cell with respect to another electrode cell. Otherwise, the detecting unit may detect a relative position between two unit electrodes.

In a unit electrode cell, a negative electrode is slightly larger than a positive electrode, in order to ensure that the negative electrode fully covers the positive electrode lying underneath. This is typically called an overhang structure. Particularly, in lithium-ion batteries, the overhang structure may reduce the risk of electrolyte decomposition or side reactions at the exposed edges of the positive electrode, which could otherwise lead to performance degradation or safety hazards.

The overhang structure may also be recommendable in a cell stack, in which a plurality of electrode cells are stacked on top of one another. However, due to the size difference of the individual electrodes and inaccurate alignment of electrode cells in the stacking process, misalignment of electrodes may occur. For example, a misalignment between two unit electrode cells in a cell stack may cause that a negative electrode of an upper unit electrode cell does not sufficiently cover a positive electrode of another unit electrode cell lying directly underneath.

The control unit may determine whether the unit electrode cell added to the cell stack the last time is misaligned or not, based on comparison between the detection result by the detecting unit and a predetermined range. If a misalignment is identified between the unit electrode cells, the control unit may control the transfer unit to remove the latest unit electrode cell positioned at the top of the cell stack.

According to an embodiment of the present invention, the apparatus may further have another transfer unit configured to pick and move the top unit electrode cell from the cell stack and place in a second hopper. Hence, the present invention may effectively remove the misaligned unit electrode cell from the cell stack.

On the other hand, instead of being equipped with the additional transfer unit, the apparatus of the present invention may use the transfer unit, which moves the unit electrode cells between the first hopper and the stacking table, also for the purpose of transferring the misaligned top unit electrode cell from the cell stack and place in the second hopper. This may simplify the configuration of the apparatus and reduce the entire size.

According to an embodiment of the present invention, the another transfer unit may be configured to pick the unit electrode cell by applying vacuum force.

Accordingly, the present invention is capable of picking up the top unit electrode cell without negatively affecting the alignment of unit electrode cells remaining in the cell stack.

According to an embodiment of the present invention, the control unit may be configured to determine that the detected relative position is not within the predetermined range if, when seen from a stacking direction, a negative electrode does not entirely cover a positive electrode directly underneath.

Accordingly, the present invention may reduce the risk of electrolyte decomposition or side reactions at the exposed edges of the positive electrode, which could otherwise lead to performance degradation or safety hazards.

According to an embodiment of the present invention, the detecting unit may be further configured to detect, prior to placing a first unit electrode cell on top of a second unit electrode cell forming the cell stack, a relative position of the first unit electrode cell with respect to the second unit electrode cell.

According to an embodiment of the present invention, the control unit may be configured to: determine whether or not the detected relative position of the first unit electrode cell with respect to the second unit electrode cell is within a predetermined range, and if the detected relative position is not within the predetermined range, control the stacking table to move so that the relative position of the first unit electrode cell with respect to the second electrode cell is within the predetermined range.

According to the present invention, if the detected relative position is not within the predetermined range, the misalignment of the electrode cell may be adjusted in an easy way, before stacking the electrode cell on the cell stack, by changing the position of the unit electrode cell and/or the cell stack, such that their relative position enters into the predetermined range. This may further reduce the amount of wasted electrodes and decrease the manufacturing process time.

A further aspect of the present invention is directed to a method for manufacturing a secondary battery assembly. The method may include: sequentially stacking a plurality of unit electrode cells on top of one another, thereby forming a cell stack; detecting a relative position of a unit electrode cell placed on top of the cell stack with respect to another unit electrode cell therebelow; determining whether or not the detected relative position of the top unit electrode cell is within a predetermined range with respect to the another unit electrode cell; removing the top unit electrode cell from the cell stack, if the detected relative position is not within the predetermined range; and continuing with the sequentially stacking step after the removing step until a target number of unit electrode cells are stacked.

Accordingly, the present invention can remove a misaligned unit electrode cell separately from the other electrode cells forming the cell stack. Therefore, it may reduce wasted electrodes and save overall process time.

According to an embodiment of the present invention, the method may further include transferring and collecting the removed unit electrode cell at a predetermined place.

Accordingly, the present invention may allow the collected, misaligned unit electrodes to be reused.

According to an embodiment of the present invention, the detected relative position may be determined not within the predetermined range if, when seen from a stacking direction, an anode placed above a cathode does not entirely cover the cathode.

Accordingly, the present invention may reduce the risk of electrolyte decomposition or side reactions at the exposed edges of the positive electrode, which could otherwise lead to performance degradation or safety hazards.

According to an embodiment of the present invention, the method may further include detecting, prior to placing a first unit electrode cell on top of a second unit electrode cell forming the cell stack, a relative position of the first unit electrode cell with respect to the second unit electrode cell.

According to an embodiment of the present invention, the method may further include determining whether or not the detected relative position of the first unit electrode cell with respect to the second unit electrode cell is within a predetermined range; and if the detected relative position is not within the predetermined range, moving the cell stack including the second unit electrode cell, so as to adjust the relative position of the first unit electrode cell with respect to the second unit electrode cell to be within the predetermined range.

According to the present invention, if the detected relative position is not within the predetermined range, the misalignment of the electrode cell may be adjusted in an easy way, before stacking the electrode cell on the cell stack, by changing the position of the unit electrode cell and/or the cell stack, such that their relative position enters into the predetermined range. This may further reduce the amount of wasted electrodes and decrease the manufacturing process time.

When manufacturing a secondary battery assembly by using the apparatus or method in accordance with the present invention, an enhanced efficiency of the manufacturing process can be achieved.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Figs. 1a and 1b: schematically illustrate an exemplary cell stack having a plurality of unit electrode cells sequentially stacked in the vertically direction, in accordance with the related art;
- Fig. 2: is a flowchart illustrating a stacking process including a monitoring step in accordance with the related art;
- Figs. 3a to 3c: schematically illustrate respective parts of an apparatus for manufacturing a secondary battery assembly in accordance with an embodiment of the present invention;
- Fig. 4: is a flow chart illustrating a stacking process, in accordance with an embodiment of the present invention; and
- Fig. 5: is a flow chart illustrating additional steps of the stacking process of Fig. 4, in accordance with an embodiment of the present invention.

### DETAILED DESCRIPTION OF EXEMPLARY EMBODIMENTS

Terms or words used in the present description and claims should not be restrictively interpreted as ordinary meanings or dictionary-based meanings, but should be interpreted as meanings and concepts consistent with the technical ideas of the present invention in the broadest possible way.

In the present disclosure, it should be understood that terms "comprises", "includes", "has", etc. specify the presence of stated features, numbers, steps, operations, elements, components, or combinations thereof, but do not preclude the presence or addition of one or more other features, numbers, steps, operations, elements, components, or combinations thereof.

Also, when a portion such as a layer, a film, an area, a plate, or the like is referred to as being "on" another portion, this includes not only the case in which the portion is "directly on" the another portion, but also the case in which still another portion is interposed therebetween. In contrast, when a portion such as a layer, a film, an area, a plate, or the like is referred to as being "below" another portion, this includes not only the case in which the portion is "directly below" the another portion, but also the case in which still another portion is interposed therebetween. In addition, to be disposed "on" in the present disclosure may include the case disposed at the lower portion as well as the upper portion.

Terms such as "first" and "second" may be used to describe various components, but the components should not be limited by the terms. The terms are used only for the purpose of distinguishing one component from another. For example, without departing from the scope of the present invention, a first component may be referred to as a second component, and similarly, the second component may also be referred to as the first component. Singular expressions include plural expressions unless the context clearly indicates otherwise.

In addition, the same reference numbers will be used throughout the drawings to refer to parts that perform similar functions or operations. In the case in which one part is said to be connected to another part in this disclosure, not only may the one part be directly connected to the other part, but also the one part may be indirectly connected to the other part via a further part. In addition, that a certain element is included does not mean that other elements are excluded, but means that such elements may be further included unless mentioned otherwise.

Hereinafter, a system and a method for manufacturing a secondary battery assembly in accordance with the present invention will be described in detail with reference to the accompanying drawings.

A secondary battery assembly may consist of a positive electrode, a separator, and a negative electrode.

The positive and the negative electrode may be manufactured as a form of sheet, respectively. An electrode sheet may have a structure in which an electrode mixture layer is coated on one side or both of a current collector layer.

The electrode mixture layer may be a slurry containing an active material, a binder, and a solvent, wherein the binder helps to hold the active material particles together and adhere them to the current collector layer. The active materials are components that undergo electrochemical reactions to store and release energy during the charge and discharge cycles in the secondary battery. For example, one or more of lithium cobalt oxide, lithium manganese oxide, lithium iron phosphate, nickel manganese, and nickel cobalt aluminum oxide may be used as a positive active material. For example, one or more of graphite, lithium titanate, and silicon-based materials may be used as a negative active material.

The current collector layer may be a thin metal foil designed to conduct electric current between an electrochemical active material and an external circuit of the battery. For example, an aluminum layer may be used for the positive current collector, while a copper layer may be used for the negative current collector. An additional coating layer may be coated on the current collector layer to improve adhesion with the active materials, enhance corrosion resistance, or reduce electrical resistance.

The electrode mixture layer may be coated onto the current collector layer to the desired thickness in the desired area. The coated portion may be positioned in the middle of the electrode sheet along its width, and the uncoated portion may be positioned, e.g., at both sides of the coated portions. Various methods may be used for the coating process. For example, the slurry may be spread evenly across the surface of the current collector layer by a blade. The slurry may be extruded through a narrow slot die onto the moving current collector layer. The current collector may be dipped into the slurry and then withdrawn at a controlled speed. Otherwise, the slurry may be atomized and sprayed onto the current collector.

After coating the electrode mixture layer on the current collector layer, a process for increasing density of the coated electrode mixture layer is performed, typically being called a drying and pressing process. The process reduces the thickness of the electrode sheet to achieve the desired density, which enhances both the energy density and mechanical integrity of the electrode sheet. For example, a heavy roller with a heater may be used for pressing the electrode sheet. A pressure is to be exerted on the electrode sheet by the heavy roller during the process.

The separator is composed of thin and porous materials. The separator is for physically isolating the positive and the negative electrodes from each other while allowing a flow of ions between them. The separator prevents short circuits, allows ion flows, and ensures mechanical stability by supporting an electrode assembly, helping to maintain the integrity of the battery's internal structure during operation. The material of the separator requires properties of chemical stability, mechanical strength, and low cost. It may further require a relatively low melting point, which can provide a safety mechanism by shutting down the battery if it overheats. For example, a thin Polypropylene (PP) layer, a thin layer of ceramic coated separator layer, a nonwoven fabric layer, or a composite layer of different materials, such as polymers and ceramic, to optimize the performance characteristics like mechanical strength, thermal stability, and electrolyte wettability, may be used for the separator. The selection of separator depends on the specific requirements of specification of a secondary battery.

In the meantime, cutting of the dried electrode sheet and the separator is performed. The dried electrode sheets are cut into a desired precise shape and size, required by the specification of the final battery assembly. The separators are also cut into a predetermined shape and size, satisfying the specification.

A notching process may also be performed in areas of a non-coated portion of the electrode sheet in order for forming an electrode tab. During the notching process, a portion of the electrode sheet, on which the electrode mixture coating is absent, is selectively removed, or cut off, thereby to create an electrode tab. For example, the process may be done by using precision tools like lasers or mechanical dies. The electrode tab, being an uncoated area of the current collector layer, may be electrically connected to an external electrode lead. The electrode lead may be a strip of metal that can connect the electrode assembly, via the electrode tab, to an external battery terminal. The electrode tab may be formed in a specific pattern, such as rectangular, U-shaped, or V-shaped cuts, etc., to optimize the attachment with the electrode lead and ensure a good electrical connection.

The prepared positive electrode, separator, and negative electrode are alternately stacked in a precise order, so as to build an electrode assembly. Otherwise, a unit electrode cell of a layered structure may be obtained through the stacking, in which each positive electrode is separated from the negative electrode by a separator interposed therebetween. An electrode assembly may be subsequently built by stacking the unit electrode cells, instead of individual electrodes.

The unit electrode cell may have a laminated structure of a positive electrode, a negative electrode, and/or a separator. However, the laminated structure of a unit electrode cell is not limited thereto. The unit electrode cell may have a different structure. For example, the unit electrode cell may be an A-type bi-cell having a laminated structure of a positive electrode, a separator, a negative electrode, a separator and a positive electrode or a C-type bi-cell having a laminated structure of a negative electrode, separator, a positive electrode, a separator and a negative electrode. The unit electrode cell may be a Mono-cell having a laminated structure of a positive electrode, a separator, a negative electrode and a separator. The unit electrode cell may as well be a Half-cell having a laminated structure of a separator, a negative electrode and a separator.

In the laminated structure, the electrodes and the separator are securely bonded together by heat and pressure applied during or after the stacking process.

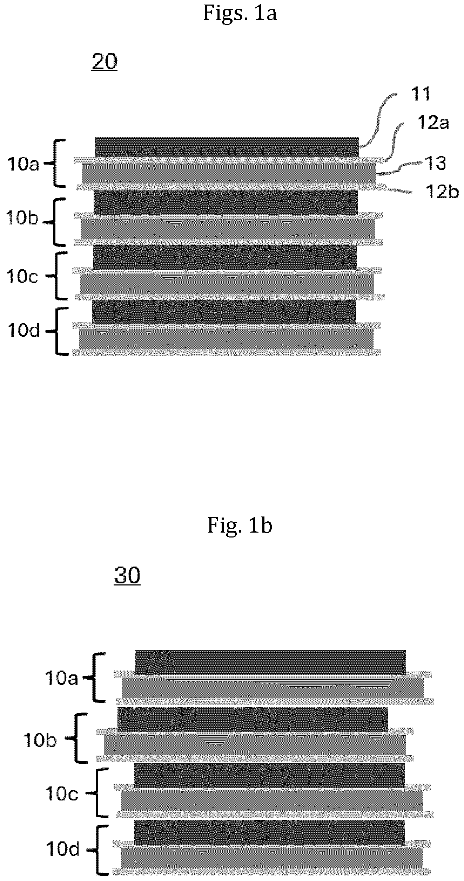

Figs. 1a and 1b schematically illustrate an exemplary cell stack 20, 30 having a plurality of unit electrode cells 10a, 10b, 10c, 10d sequentially stacked in the vertically direction, in accordance with the related art.

Referring to Fig. 1, each unit electrode cell 10a, 10b, 10c, 10d may be a Mono-cell including a separator 12b, a negative electrode 13, a separator 12a and a positive electrode 11, stacked in that order, from the bottom to the top. However, the present embodiment is not limited thereto. The unit electrode cell may be of any other structure, particularly including a bi-cell, a half cell, a full cell, or any combination thereof.

The exemplary unit electrode cell 10a, 10b, 10c, 10d, as well as individual components thereof, generally has a length, breadth and a height. The height, or in other words, a thickness, may be a measurement along the stacking direction of the individual components, including the electrodes 11, 13 and the separators 12a, 12b. The length is an extent along the direction electrode tabs protrude from the main body of the unit electrode cell 10a, 10b, 10c, 10d, being perpendicular to the height. The breadth is a measurement along a direction perpendicular to both the height and the length.

In the exemplary unit electrode cell 10a, 10b, 10c, 10d, the negative electrode 13 may be slightly larger than a positive electrode 11 in terms of the breadth. Hence, the cell stack 20, 30 has a so-called overhang structure, in the sense that the positive electrode 11 lies fully covered beneath an overhang of the negative electrode 13. Particularly, in lithium-ion batteries, the overhang structure may be advantageous as it reduces the risk of electrolyte decomposition or side reactions at the exposed edges of the positive electrode, which could otherwise lead to performance degradation or safety hazards.

During the stacking of the unit electrode cells 10a, 10b, 10c, 10d for building the cell stack 20, 30, misalignment may occur. For example, a cell stack 30, as shown in Fig. 1b, may include a misaligned unit electrode cell 10b, among other unit electrodes 10a, 10c, and 10d.

In order to prevent the defective cell stack 30 with the misaligned unit electrode cell 10b from being transferred downstream in the manufacturing process, a dimension monitoring process may be carried out during the stacking process.

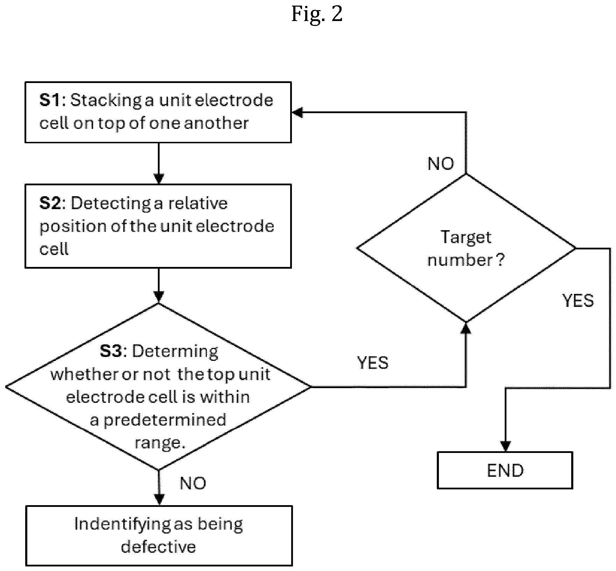

Fig. 2 is a flowchart illustrating a stacking process including a monitoring step.

Referring to Fig. 2, a method for manufacturing a secondary battery may sequentially stack a plurality of unit electrode cells on top of one another, thereby forming a cell stack. Specifically, one unit electrode cell is stacked on top of a previously built partial cell stack in step S1. After stacking the one additional unit electrode cell, in step S2 a relative position of the unit electrode cell placed on top of the cell stack is detected with respect to the unit electrode cell directly underneath. Based on the detected relative position, it is determined in step S3 whether or not the top unit electrode cell is within a predetermined range with respect to the unit electrode cell directly underneath. If the detected relative position of the top unit electrode cell is determined within the predetermined range with respect to the unit electrode cell directly underneath, the sequentially stacking step S1 continues until the cell stack comprises a target number of unit electrode cells. If the detected relative position is determined falling out of the predetermined range, the cell stack may be identified as being defective or misaligned.

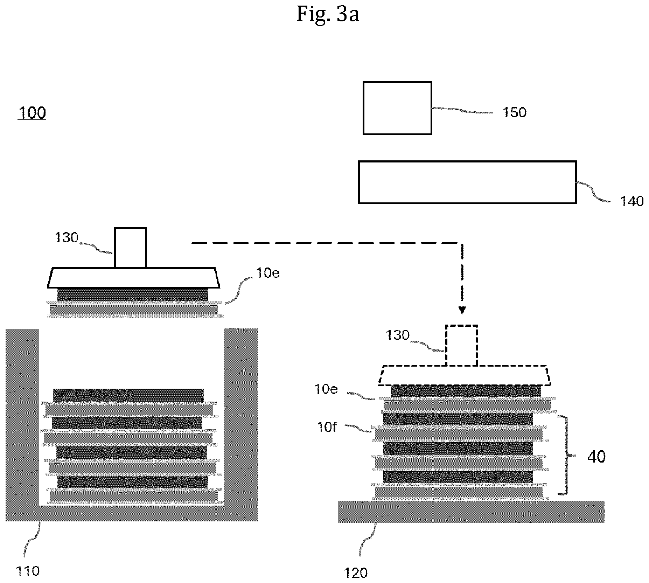

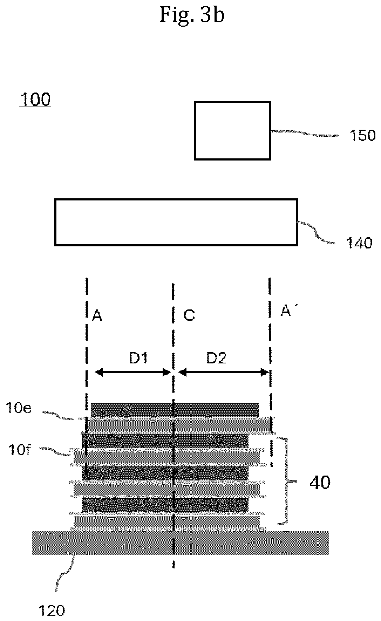

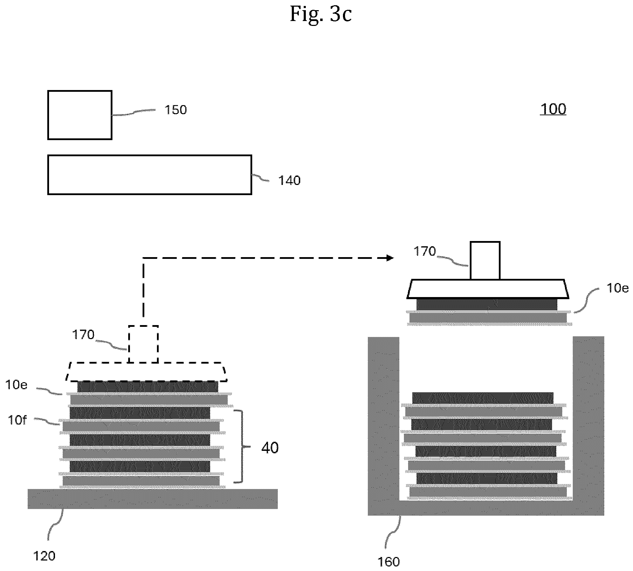

Figs. 3a, 3b, and 3c schematically illustrate respective parts of an apparatus for manufacturing a secondary battery assembly in accordance with an embodiment of the present invention.

The manufacturing apparatus 100 may be equipped with a first hopper 110 configured to accommodate a plurality of unit electrode cells therein. However, the embodiment is not limited thereto. Any other equipment may be employed for holding a plurality of unit electrode cells 10 before being supplied to the stacking process. For example, instead of the first hopper 110, a conveyor (not shown) may be used for the purpose of supplying unit electrode cells 10 to the stacking process. With this setup, a plurality of unit electrode cells 10 may be delivered while being sequentially arranged on the conveyor.

The apparatus 100 may further include a stacking table 120 configured to allow the plurality of unit electrode cells 10 stacked thereon to thereby form a cell stack 40. The apparatus 100 may be further provided with a transfer unit 130 that is configured to pick a respective one of the plurality of unit electrode cells 10e accommodated in the first hopper 110 and move to the stacking table 120. The transfer unit 130 may be configured to pick the unit electrode cell 10e by applying vacuum force. The transfer unit 130 may include one or more vacuum holes (not shown) facing downwards, towards the unit electrode cells accommodated in the first hopper 110. The vacuum hole(s) are preferably located at the center of the transfer unit 130. A control unit 150 may control the position of the transfer unit 130, such that the vacuum hole(s) can be positioned at the center of the unit electrode cell 10e to be picked up. By applying vacuum force, the unit electrode cell 10e positioned at the top can be picked up by the transfer unit 130 in a stable way, minimizing an impact to the other unit electrodes remaining in the first hopper 110, The transfer unit 130 subsequently moves the picked-up unit electrode cell 10e to the stacking table 120. Upon reaching the stacking table 120, the transfer unit 130 places the single unit electrode cell 10e on top of the already existing cell stack 40, or to be more specific, on the unit electrode cell 10f added to the cell stack 40 last time and positioned at the top.

The apparatus 100 may further include a detecting unit 140 configured to detect a relative position of the unit electrode cell 10e placed at the top of the cell stack 40 with respect to the unit electrode cell 10f directly underneath. Once the relative position is detected, a control unit 150 determines whether or not the detected relative position of the top unit electrode cell 10e is within a predetermined range with respect to the unit electrode cell 10f positioned directly underneath. For example, the control unit 150 may determine whether a positive electrode of the previously stacked unit electrode cell 10f is positioned completely beneath an overhang of a negative electrode of the presently stacked unit electrode cell 10e. For this purpose, two lateral sides of the negative electrode of the unit electrode cell 10e may be detected by the detecting unit 130 and a vertical extension of the two lateral sides may be respectively identified as a line A and a line A', see Fig. 3b. The control unit 150 may be configured to determine that the detected relative position is not within the predetermined range if, when seen from a stacking direction of the electrode cells, an anode - a negative electrode - does not entirely cover a cathode - a positive electrode - positioned directly underneath. For example, if a part of a positive electrode of the unit electrode cell 10f extends out of an area covered by a negative electrode of the unit electrode cell 10e - or, in other words, beyond the lines A and A, then the unit electrode cell 10e should be identified as misaligned.

Alternatively or additionally, the detection unit 140 may be configured to measure distances D1 and D2, respectively between lines A and A' and the centerline C of the stacking table 120. The control unit 150 may be configured to determine whether any one of the distance D1 and the distance D2 is larger than a reference (threshold) value. The reference value may be determined based on the specification of the battery assembly. Furthermore, the distances D1 and D2 may not be identical. For example, they may have different values if the centerline of the unit electrode cell, subject to the detection, is not exactly aligned with the centerline C of the stacking table 120. According to this method, determination on misalignment of the top unit electrode cell 10e can be made by detecting the absolute position of the top unit electrode cell 10e, without considering its relative position with respect to the unit electrode cell 10f underneath.

If the detected relative position of the unit electrode cell place at the top is not within the predetermined range with respect to the unit electrode cell directly underneath and/or if either one of the distances D1 and D2 is larger than the reference value, the unit electrode cell is identified as misaligned. The control unit 150 may be programmed to remove the top unit electrode cell 10e identified as misaligned from the cell stack 40.

The top unit electrode cell 10e, which has been identified as misaligned, may be removed by a second transfer unit 170. The second transfer unit 170 is configured to pick the top unit electrode cell 10e separately from the other electrode cells forming the cell stack 40 and move and place it in a second hopper 160.

The second transfer unit 170 may be configured to pick up the unit electrode cell by applying vacuum force. Picking up the top unit electrode cell 10e should not affect the alignment of the other unit electrode cells remaining in the cell stack 40. The second transfer unit 170 may include one more vacuum holes (not shown) facing downwards, towards the top unit electrode cell 10e. The vacuum hole(s) may be located at the center of the second transfer unit 170. The control unit 150 may control the position of the second transfer unit 170, such that the vacuum hole(s) can be positioned at the center of the top unit electrode cell 10e.

Optionally, the stacking table 120 may further include a gripper or a guide unit (not shown) to hold the cell stack 40 while the misaligned top unit electrode cell 10e is detached from the cell stack 40 by the second transfer unit 170. This can further reduce any undesirable impact that might be applied by the second transfer unit 170 to the other electrodes of the cell stack 40.

The unit electrode cell 10e removed by the second transfer unit 170 may be transferred to and collected at a designate space.

Accordingly, the apparatus 100 can remove the misaligned unit electrode cell 10e separately from the entire cell stack 40, rather than discarding the entire cell stack 40. Therefore, the number of discarded electrodes can be reduced, preventing excessive waste of materials. Furthermore, since the cell stack 40 remaining after the removal of the misaligned top unit electrode 10e can be used for manufacturing an electrode assembly, the overall manufacturing time can be reduced.

The wasted electrodes may be further reduced by improving the accuracy of placement of a unit electrode cell on top of a cell stack. The accuracy of picking and placing by the transfer unit 130 may be improved by using the detecting unit 140 and the control unit 150. For example, when the transfer unit 130 holding the unit electrode cell has reached the stacking table 120, a relative position of the unit electrode cell 10e and the cell stack 40may be detected, prior to placing the unit electrode cell 10e on top of the cell stack 40. Based on the detection result, the control unit 150 may determine whether the relative position is within a predetermined range. If the detected relative position is not within the predetermined range, the control unit 150 may adjust the relative position by moving at least one of the unit electrode cell 10e and the cell stack 40, such that their relative position enters the predetermined range.

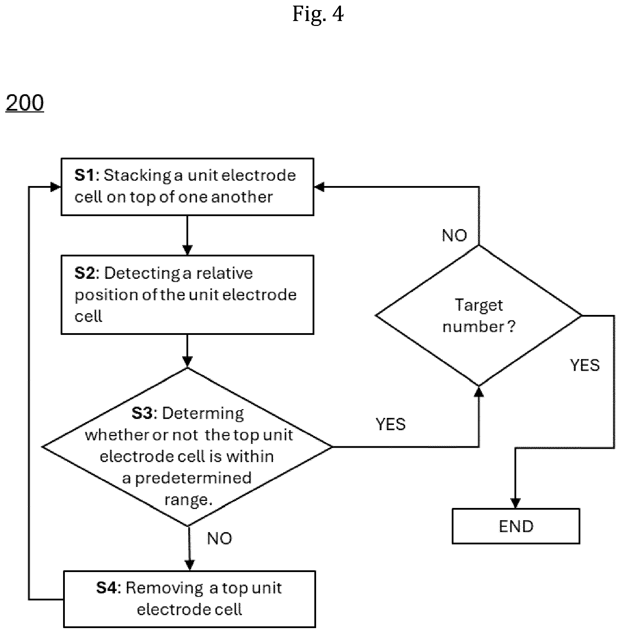

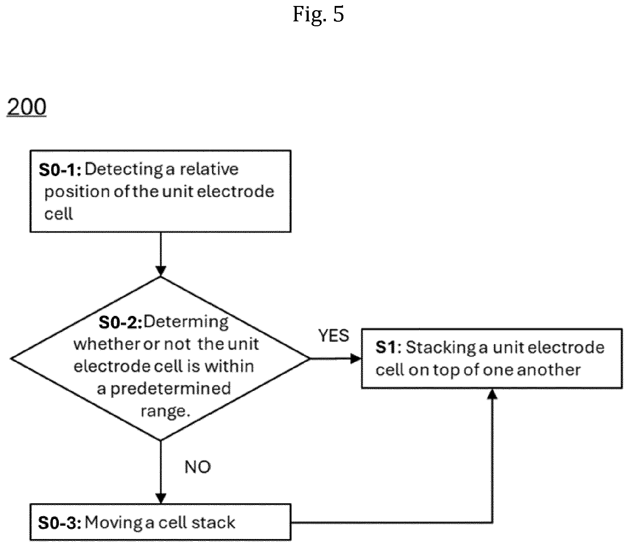

Figs. 4 and 5 are a flowchart illustrating a stacking process further including a removing step and a moving step in accordance with an embodiment of the present invention.

Referring to Fig. 4, a method for manufacturing a secondary battery may sequentially stack a plurality of unit electrode cells on top of one another, thereby forming a cell stack. Specifically, one unit electrode cell is stacked on top of a previously built partial cell stack in step S1. After stacking the one additional unit electrode cell, in step S2 a relative position of the unit electrode cell placed on top of the cell stack is detected with respect to the unit electrode cell directly underneath. Based on the detected relative position, it is determined in step S3 whether or not the top unit electrode cell is within a predetermined range with respect to the unit electrode cell directly underneath. In detail, the detected relative position may be determined not within the predetermined range if, when seen from above, along the stacking direction, an anode - a negative electrode - placed above a cathode - a positive electrode - does not entirely cover the cathode. If the detected relative position of the top unit electrode cell is determined within the predetermined range with respect to the unit electrode cell directly underneath, the sequentially stacking step S1 continues until the cell stack comprises a target number of unit electrode cells. If the detected relative position is determined falling out of the predetermined range, the top unit electrode cell may be identified as being misaligned. The misaligned top unit electrode cell may be removed in step S4, and the process returns to step S1.

In the meantime, making reference to Fig. 5, the method 200 may further include additional steps, which may be optionally performed prior to step S1. These additional steps are preferably to be performed once the transfer unit 130 holding the unit electrode cell has reached the stacking table 120, prior to placing the unit electrode cell on top of another unit electrode cell forming the cell stack. In step S0-1, a relative position of the unit electrode cell is detected with respect to the top unit electrode cell forming the cell stack. Based on the detection, it is determined in step S0-2 whether or not the relative position of the unit electrode cell is within a predetermined range with respect to the top unit electrode cell of the cell stack. If the detected relative position of the unit electrode cell is determined within the predetermined range with respect to the top unit electrode cell of the cell stack, then the process directly moves to step S1. If the detected relative position is determined falling out of the predetermined range, the relative position is adjusted to enter into the predetermined range, for example, by moving the unit electrode cell and/or the cell stack (SO-3). Subsequently, the process proceeds to step S1.

Although specific embodiments have been illustrated and described herein, it will be appreciated by those of ordinary skill in the art that a variety of alternate and/or equivalent implementations exist. It should be appreciated that the exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

### LIST OF REFERENCE SIGNS

- 10a, 10b, 10c, 10d, 10e, 10f: unit electrode cell
- 11: positive electrode
- 12a, 12b: separator
- 13: negative electrode
- 20, 30, 40: cell stack
- 100: apparatus
- 110: first hopper
- 120: stacking table
- 130: transfer unit
- 140: detecting unit
- 150: control unit
- 160: second hopper
- 170: second transfer unit

## Claims

1. An apparatus for manufacturing a secondary battery assembly, comprising:
a first hopper configured to contain a plurality of unit electrode cells;
a stacking table configured to have the plurality of unit electrode cells stacked thereon to thereby form a cell stack;
a transfer unit configured to sequentially pick a respective one of the plurality of unit electrode cells in the first hopper, move it to the staking table and place on top of one another;
a detecting unit configured to detect a relative position of a unit electrode cell placed on top of the cell stack with respect to another unit electrode cell therebelow; and
a control unit configured to determine whether or not the detected relative position of the top unit electrode cell is within a predetermined range with respect to the another unit electrode cell,
wherein the control unit is further configured to, if the detected relative position is not within the predetermined range, remove the top unit electrode cell from the cell stack.

2. The apparatus of claim 1, further comprising another transfer unit configured to pick and move the top unit electrode cell from the stack and place it in a second hopper.

3. The apparatus of claim 2, wherein the another transfer unit is configured to pick the unit electrode cell by applying vacuum force.

4. The apparatus of any one of the preceding claims, wherein the control unit is configured to determine that the detected relative position is not within the predetermined range if, when seen from a stacking direction, an anode placed above a cathode does not entirely cover the cathode.

5. The apparatus of any one of the preceding claims, wherein the detecting unit is further configured to detect, prior to placing a first unit electrode cell on top of a second unit electrode cell forming the cell stack, a relative position of the first unit electrode cell with respect to the second unit electrode cell.

6. The apparatus of claim 5, wherein the control unit is configured to:
determine whether or not the detected relative position of the first unit electrode cell with respect to the second unit electrode cell is within a predetermined range, and
if the detected relative position is not within the predetermined range, control the stacking table to move so that the relative position of the first unit electrode cell with respect to the second electrode cell is within the predetermined range.

7. A method for manufacturing a secondary battery assembly, comprising:
sequentially stacking a plurality of unit electrode cells on top of one another, thereby forming a cell stack;
detecting a relative position of a unit electrode cell placed on top of the cell stack with respect to another unit electrode cell therebelow;
determining whether or not the detected relative position of the top unit electrode cell is within a predetermined range with respect to the another unit electrode cell;
removing the top unit electrode cell from the cell stack, if the detected relative position is not within the predetermined range; and
continuing with the sequentially stacking step after the removing step until a target number of unit electrode cells are stacked.

8. The method of claim 7, further comprising transferring and collecting the removed unit electrode cell at a predetermined place.

9. The method of claim 7 or 8, wherein the detected relative position is determined not within the predetermined range if, when seen from a stacking direction, an anode placed above a cathode does not entirely cover the cathode.

10. The method of any one of claims 7 to 9, further comprising: detecting, prior to placing a first unit electrode cell on top of a second unit electrode cell forming the cell stack, a relative position of the first unit electrode cell with respect to the second unit electrode cell.

11. The method of claim 10, further comprising:
determining whether or not the detected relative position of the first unit electrode cell with respect to the second unit electrode cell is within a predetermined range; and
if the detected relative position is not within the predetermined range, moving the cell stack including the second unit electrode cell, so as to adjust the relative position of the first unit electrode cell with respect to the second unit electrode cell to be within the predetermined range.

## Amended claims

### Amended claims in accordance with Rule 137(2) EPC.

1. A method for manufacturing a secondary battery assembly, comprising:
sequentially stacking (S1) a plurality of unit electrode cells on top of one another, thereby forming a cell stack;
detecting (S2) a relative position of a unit electrode cell placed on top of the cell stack with respect to another unit electrode cell therebelow;
determining (S3) whether or not the detected relative position of the top unit electrode cell is within a predetermined range with respect to the another unit electrode cell;
removing (S4) the top unit electrode cell from the cell stack, if the detected relative position is not within the predetermined range; and
continuing with the sequentially stacking step after the removing step (S4) until a target number of unit electrode cells are stacked.

2. The method of claim 1, further comprising transferring and collecting the removed unit electrode cell at a predetermined place.

3. The method of claim 1 or 2, wherein the detected relative position is determined not within the predetermined range if, when seen from a stacking direction, an anode placed above a cathode does not entirely cover the cathode.

4. The method of any one of claims 1 to 3, further comprising: detecting (S0-1), prior to placing a first unit electrode cell on top of a second unit electrode cell forming the cell stack, a relative position of the first unit electrode cell with respect to the second unit electrode cell.

5. The method of claim 4, further comprising:
determining (S0-2) whether or not the detected relative position of the first unit electrode cell with respect to the second unit electrode cell is within a predetermined range; and
if the detected relative position is not within the predetermined range, moving (S0-3) the cell stack including the second unit electrode cell, so as to adjust the relative position of the first unit electrode cell with respect to the second unit electrode cell to be within the predetermined range.

6. An apparatus (100) for manufacturing a secondary battery assembly, comprising:
a first hopper (110) configured to accommodate a plurality of unit electrode cells (10a, 10b, 10c, 10d) or a conveyor configured to supply a plurality of unit electrode cells (10a, 10b, 10c, 10d);
a stacking table (120) configured to have the plurality of unit electrode cells (10a, 10b, 10c, 10d) stacked thereon to thereby form a cell stack (40);
a transfer unit (130, 170) configured to sequentially pick a respective one (10e) of the plurality of unit electrode cells in the first hopper (110), move it to the staking table (120) and place on top of one another (10f);
a detecting unit (140) configured to detect a relative position of a unit electrode cell (10e) placed on top of the cell stack (40) with respect to another unit electrode cell therebelow (10f);
a control unit (150) configured to:
determine whether or not the detected relative position of the top unit electrode cell (10e) is within a predetermined range with respect to the another unit electrode cell (10f), and
control the transfer unit (130, 170) to remove the top unit electrode cell (10e) from the cell stack (40), if the detected relative position is not within the predetermined range.

7. The apparatus (100) of claim 6, wherein the control unit (150) is configured to determine that the detected relative position is not within the predetermined range if, when seen from a stacking direction, an anode placed above a cathode does not entirely cover the cathode.

8. The apparatus (100) of any one of the claims 6 or 7, wherein the detecting unit (140) is further configured to detect, prior to placing a first unit electrode cell (10e) on top of a second unit electrode cell (10f) forming the cell stack (40), a relative position of the first unit electrode cell (10e) with respect to the second unit electrode cell (10f).

9. The apparatus (100) of claim 8, wherein the control unit (150) is configured to:
determine whether or not the detected relative position of the first unit electrode cell (10e) with respect to the second unit electrode cell (10f) is within a predetermined range, and
if the detected relative position is not within the predetermined range, control the stacking table (120) to move so that the relative position of the first unit electrode cell (10e) with respect to the second electrode cell (10f) is within the predetermined range.
